# EUROPÄISCHE PATENTANMELDUNG

(11) **EP 4 144 787 A1**
(43) Veröffentlichungstag der Anmeldung: **08.03.2023**
(21) Anmeldenummer: 22190378.4
(22) Anmeldetag: 15.08.2022
(51) Int. Cl.: C08K 3/22, C08K 5/42, C08K 5/43, B60C 1/00, B60C 9/00

(54) **SCHWEFELVERNETZBARE GUMMIERUNGSMISCHUNG UND FAHRZEUGLUFTREIFEN**

(30) Priorität: 06.09.2021 DE 102021209764
(71) Anmelder: Continental Reifen Deutschland GmbH, 30165 Hannover (DE)
(72) Erfinder: Guardalabene, Joseph, 30165 Hannover (DE)
(74) Vertreter: Continental Corporation

(57) **Zusammenfassung**

Die Erfindung betrifft eine schwefelvernetzbare, im Wesentlichen von Cobalt freie Gummierungsmischung für metallische Festigkeitsträger, die
- 0,5 bis 3 phr (Gewichtsteile, bezogen auf 100 Gewichtsteile der gesamten Kautschuke in der Mischung) zumindest eines Sulfenimidbeschleunigers und
- 0,25 bis 5 phr zumindest eines nach der Vulkanisation wirkenden Haftungsstabilisators enthält.

Ferner betrifft die Erfindung einen Fahrzeugluftreifen, der zumindest eine solche mit Schwefel vernetzte Gummierungsmischung aufweist.

## Beschreibung

Die Erfindung betrifft eine schwefelvernetzbare, im Wesentlichen von Cobalt freie Gummierungsmischung für metallische Festigkeitsträger.

Ferner betrifft die Erfindung einen Fahrzeugluftreifen, der zumindest eine solche mit Schwefel vernetzte Gummierungsmischung aufweist.

Schwefelvernetzbare Gummierungsmischungen enthalten zur Beschleunigung der Vulkanisationsreaktion üblicherweise Vulkanisationsbeschleuniger. Zu den eingesetzten Beschleunigern zählen beispielsweise Sulfenamid- und Sulfenimidbeschleuniger. Die Verwendung des Sulfenimidbschleunigers N-tert.-Butyl-2-benzothiazolsulfenimid (TBSI) als Vulkanisationsbeschleuniger in cobalthaltigen Gummierungsmischungen ist beispielsweise aus der US 2010/0200141 A1 und der US 6,120,911 bekannt.

Schwefelvernetzbare Gummierungsmischungen für metallische Festigkeitsträger, insbesondere für vermessingten Stahlcord, enthalten in der Regel auf Cobalt basierende Haftsysteme, die beispielsweise noch Methylenakzeptor-Methylendonor-Paare aufweisen. Die Cobaltverbindungen, in der Regel organische Cobaltsalze, sollen dabei einen zu schnellen Aufbau von Zinkoxid- und Kupfersulfidlagen auf der Messingschicht des Stahlcorde, welche sich während des Alterns der Gummi-Stahlcord-Verbundes bilden, hemmen. Die Zinkoxid- und Kupfersulfidlagen können im Verlauf der Lebensdauer spröde werden und so zu einer verminderten Haftung zwischen Stahlcord und Gummi führen.

Die Verwendung von Cobaltsalzen für Gummierungsmischungen ist jedoch auch mit einigen Nachteilen behaftet. Organische Cobaltsalze können zum einen als Oxidationskatalysatoren wirken und daher zu unerwünschten Alterungsprozessen innerhalb der Mischungsschichten führen. Zum anderen werden Cobalt und dessen Salze als gesundheitsschädlich eingestuft und der Abbau von Cobalt und die Herstellung der Salze schädigt die Umwelt. Außerdem besteht weltweit ein wachsender Bedarf an Cobalt in der Batterieindustrie. Es ist daher zu erwarten, dass die derzeit schon hohen Preise für Cobalt in den nächsten Jahren weiter steigen.

Man ist daher bestrebt, Cobalt in Gummierungsmischungen zu reduzieren.

Um dies zu erreichen, hat man z. B. Stahlcorde mit speziellen Legierungen auf der Oberfläche entwickelt, die z. T. schon Cobalt enthalten. Auf diese Weise wird allerdings der Cobaltverbrauch insgesamt nicht vermindert, sondern nur auf die Seite des Stahlcordes verschoben.

Ein anderer Weg, Cobalt in den Gummierungsmischungen zu vermeiden, besteht im Ersatz der Cobaltverbindungen in den Mischungen durch alternative chemische Substanzen. Als Ersatz für Haftungsvermittler auf der Basis von Cobalt wird z. B. Duralink^{™} HTS von der Firma Eastman angeboten. Es handelt sich dabei um einen nach der Vulkanisation wirkenden Haftungsstabilisator folgender chemischer Zusammensetzung: NaO₃SS(CH₂)₆SSO₃Na·2 H₂O. Diese Substanz soll ein flexibleres bimodales Netzwerk bewirken mit einem höheren Anteil an disulfidischen Bindungen zwischen vermessingter Stahlcordoberfläche und umgebendem Polymer und weniger polysulfidischen Bindungen. Letztere sind anfällig für thermische Reversion.

Der Erfindung liegt die Aufgabe zu Grunde, eine schwefelvernetzbare Gummierungsmischung bereitzustellen, die im Wesentlichen frei von Cobalt ist und hinsichtlich der Haftungseigenschaften weiter verbessert ist und damit zu einer Verbesserung der Haltbarkeit der gummierten Festigkeitsträgerlagen auch bei erhöhten Temperaturen führt.

Gelöst wird die Aufgabe erfindungsgemäß dadurch, dass die im Wesentlichen von Cobalt freie Gummierungsmischung
- 0,5 bis 3 phr (Gewichtsteile, bezogen auf 100 Gewichtsteile der gesamten Kautschuke in der Mischung) zumindest eines Sulfenimidbeschleunigers und
- 0,25 bis 5 phr zumindest eines nach der Vulkanisation wirkenden Haftungsstabilisators enthält.

Unter einer im Wesentlichen von Cobalt freien Gummierungsmischung ist dabei eine Gummierungsmischung zu verstehen, die im Wesentlichen frei von Cobalt oder organischen Cobaltverbindungen ist. Der Gehalt an Cobalt, gemessen mittels Röntgenfluoreszenzspektroskopie, ist in der vulkanisierten Gummierungsmischung kleiner als 0,01 Gew.-% bezogen auf das Gewicht der vulkanisierten Gummimischung.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Überraschenderweise hat sich gezeigt, dass sich mit der speziellen Kombination eines Sulfenimidbeschleunigers mit einem nach Vulkanisation wirkenden Haftungsstabilisator in den angegebenen Mengen eine im Wesentlichen cobaltfreie Gummierungsmischung erhalten werden kann, die eine gute Haftung zum Festigkeitsträger auch nach Alterung aufweist.

Zusätzlich bietet die Mischung die ökologischen und ökonomischen Vorteile einer cobaltfreien Mischung.

Die erfindungsgemäße Gummierungsmischung enthält, 0,5 bis 3 phr, vorzugsweise 1 bis 2 phr, zumindest eines Sulfenimidbeschleunigers. Bei Sulfenimidbeschleunigern handelt es sich um Vulkanisationsbeschleuniger, die auf primären Aminen basieren. Im Gegensatz dazu basieren Sulfenamidbeschleuniger wie DCBS (N,N'-Dicyclohexyl-2-benzothiazolsulfenamid) oder MBS (N-Oxydiethylen-2-benzothiazolsulfenamid) auf sekundären Aminen. Es können ein oder mehrere Sulfinimidbeschleuniger in der Mischung enthalten sein.

Für ein besonders gute Alterungsbeständigkeit der Festigkeitsträger-Gummi-Haftung auch unter Sauerstoff und Sattdampfalterung handelt es sich bei dem Sulfenimidbeschleuniger um N-tert.-Butyl-2-benzothiazolsulfenimid (TBSI, IUPAC-Bezeichnung: N,N-bis(1,3-Benzothiazol-2-ylsulfanyl)-2-methylpropan-2-amin).

Die erfindungsgemäße Gummierungsmischung enthält 0,25 bis 5 phr, vorzugsweise 0,5 bis 2 phr zumindest eines nach der Vulkanisation wirkenden Haftungsstabilisators. Nach der Vulkanisation wirkende Haftungsstabilisatoren sind Substanzen, die die Gummi-Metall-Haftung nach der Vulkanisation, dadurch stabilisieren, dass sie die Reversionsneigung der Bindung (Neigung zum Bindungsbruch) zwischen Festigkeitsträgeroberfläche und einbettender Gummimischung reduzieren. Sie tragen auf diese Weise zum Erhalt der Gummi-Metall-Haftung und damit zur Haltbarkeit der Produkte bei. Es können ein oder mehrere Haftungsstabilisatoren in der Mischung enthalten sein.

Gemäß einer bevorzugten Ausführungsform der Erfindung handelt es sich bei dem nach der Vulkanisation wirkenden Haftungsstabilisator um Natrium-Hexamethylen-1,6-bisthiosulfat-Dihydrat (NaO₃SS(CH₂)₆SSO₃Na·2 H₂O). Mit diesem Haftungsstabilisator wurden die besten Ergebnisse im Hinblick auf einen Schutz vor thermischer Alterung erzielt.

Eine Gummierungsmischung, die eine besonders gute Haltbarkeit der Gummi-Metall-Haftung aufweist, enthält 1 bis 2 phr N-tert.-Butyl-2-benzothiazolsulfenimid (TBSI) und 0,5 bis 2 phr Natrium-Hexamethylen-1,6-bisthiosulfat-Dihydrat (NaO₃SS(CH₂)₆SSO₃Na·2H₂O).

Um die Haltbarkeit der Gummi-Metall-Haftung im Hinblick auf oxidative Alterungsprozesse weiter zu verbessern, hat es sich als vorteilhaft erwiesen, wenn die Gummierungsmischung 2 bis 10 phr Zinkoxid enthält.

Zur weiteren Haftungsverbesserung kann die Gummierungsmischung Methylenakzeptor-Methylendonor-Paare enthalten. Als Methylakzeptoren können dabei resorcinbasierte Methylenakzeptoren oder spezielle Novolak-Harze, wie Alnovol^{®} PN 760/Past, der Firma Allnex Netherlands B. V., dienen. Als Methylendonor/Formaldehydspender können z. B. veretherte Melaminharze enthalten sein. Zu den veretherten Melaminharzen zählen beispielsweise Hexamethoxymethylmelamin (HMMM) und Hexamethylentetramin (HMT).

Vorzugsweise handelt es sich bei den metallischen Festigkeitsträgern um vermessingten Stahlcord. Die Messingoberfläche bewirkt durch die Bildung von Kupfersulfiddendriten eine gute chemische und mechanische Verzahnung mit der angrenzenden Gummierungsmischung.

Die schwefelvernetzbare Gummierungsmischung enthält weitere in der Kautschukindustrie übliche Bestandteile, insbesondere zumindest einen Kautschuk.

Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Gummierungsmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%. Unter Naturkautschuk wird Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann.

Enthält die Gummierungsmischung als Dienkautschuk Polybutadien (BR), kann es sich um cis-1,4-Polybutadien handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte (Styrol)-Butadien-Copolymere (S-(S)BR) mit einem Styrolgehalt, bezogen auf das Polymer, von ca. 0 bis 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-(S)BR können auch gekoppelt und endgruppenmodifiziert sein. Es können aber auch emulsionspolymerisierte StyrolButadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die StyrolButadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Der Gummierungsmischung kann als Verarbeitungshilfsmittel und zur Mischungsverbilligung auch Regenerat (Reclaim) zugesetzt werden.

Die Gummierungsmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Gummierungsmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Gummierungsmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, - NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die erfindungsgemäße Gummierungsmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Gummierungsmischung zugesetzt.

Des Weiteren kann die Gummierungsmischung neben den Sulfenimidbeschleunigern weitere vulkanisationsbeeinflussende Substanzen wie weitere Vulkanisationsbeschleuniger, Vulkanisationsverzögerer und Vulkanisationsaktivatoren in üblichen Mengen enthalten. Vorzugsweise enthält die Gummierungsmischung neben den Sulfenimidbeschleunigern weniger als 0,5 phr andere Vulkanisationsbeschleuniger.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann in unterschiedlichsten Gummiprodukten, in denen Festigkeitsträger vorhanden sind, eingesetzt werden. Bei diesen Gummiprodukten kann es sich z. B. um Antriebsriemen, Fördergurte, Schläuche, gummierte Gewebe oder Luftfedern handeln.

Vorzugsweise wird die Gummierungsmischung in Fahrzeugluftreifen eingesetzt.

Die Gummierungsmischung kann zur Gummierung unterschiedlichster Reifenbauteile mit metallischen Festigkeitsträgern, wie dem Wulstkern, den Wulstabdeckungen, den Wulstverstärkern, dem Gürtel, der Karkasse oder den Gürtelbandagen, eingesetzt werden, wobei auch mehrere Bauteile innerhalb eines Reifens mit der erfindungsgemäßen Mischung versehen werden können. Die Herstellung der erfindungsgemäßen Fahrzeugluftreifen erfolgt dabei nach dem Fachmann bekannten Verfahren.

Vorzugsweise wird die Gummierungsmischung als Gürtelgummierungsmischung eingesetzt werden, wo die guten Haftwerte zwischen Festigkeitsträger und Gummierungsmischung, auch unter Alterung, zu einer hohen Lebensdauer des Fahrzeugluftreifens führen.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Gummierungsmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand der nachstehenden Tabellen näher erläutert werden.

In der Tabelle 1 sind Beispielmischungen für eine Gummierung metallischer Festigkeitsträger eines Fahrzeugluftreifens angegeben.

Bei den Mischungen der Tabelle 1 wurden der Vulkanisationsbeschleuniger, die Cobaltverbindung und der nach der Vulkanisation wirkende Haftungsstabilisator variiert.

Die Mischungsherstellung erfolgte unter üblichen Bedingungen unter Herstellung einer Grundmischung und anschließend der Fertigmischung in einem Labortangentialmischer.

Es wurden die Umsatzzeiten von 90 % Umsatz (t₉₀: Ausvulkanisationszeit) mittels rotorlosem Vulkameter (MDR = Moving Disc Rheometer) gemäß DIN 53 529 bei Vulkanisation von 160 °C bestimmt.

Aus den Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN ISO 7619-1 vor und nach Alterung über 7 Tage bei 70 °C in Luft
- Rückprallelastizität bei 70 °C gemäß DIN 53 512 vor und nach Alterung über 7 Tage bei 70 °C in Luft
- Zugfestigkeit bei Raumtemperatur gemäß DIN 53 504 vor und nach Alterung über 7 Tage bei 70 °C in Luft
- Bruchdehnung bei Raumtemperatur gemäß DIN 53504 vor und nach Alterung über 7 Tage bei 70 °C in Luft
- Ermüdungsrissbeständigkeit als Anzahl der Lastwechsel bis zum Bruch einer hantelförmigen Probe unter einem sich ständig wiederholenden Dehnungszyklus mit einer Frequenz von 104 ± 8 min⁻¹, bestimmt mit einem Monsanto Fatique to Failure Tester (abgekürzt: FTF) bei 101 % Dehnung und Raumtemperatur vor und nach Alterung über 7 Tage bei 70 °C in Luft

Ferner wurden mit den Mischungen aus der Tabelle 1 Versuche zur Haftung an vermessingtem Stahlcord (2x0,3 HT) gemäß ASTM 2229/D1871 ohne Alterung, nach zweitägiger Alterung bei 70 °C in Sauerstoff und nach fünftägiger Alterung in Sattdampf bei 105 °C vorgenommen (Prüfkörperherstellung: Vulkanisation: 30 min, 150 °C, Einbettlänge in die Gummierungsmischung: 12,5 mm, Auszugsgeschwindigkeit: 125 mm/min). Es wurden die Herausziehkraft und die Bedeckung bestimmt. Bei der Herausziehkraft wurde der Wert der Mischung 1 als 100 % gesetzt; die Werte der anderen Mischungen wurden auf die Mischung 1 bezogen.

Sämtliche Eigenschaften der Mischungen sind in der Tabelle 2 aufgelistet.

**Tabelle 1**

| **Bestandteile** | **Einheit** | **1** | **2** | **3** | **4** | **5** | **6** |
|---|---|---|---|---|---|---|---|
| Naturkautschuk | phr | 80 | 80 | 80 | 80 | 80 | 80 |
| Polybutadien | phr | 20 | 20 | 20 | 20 | 20 | 20 |
| Kieselsäure | phr | 60 | 60 | 60 | 60 | 60 | 60 |
| Weichmacher, Prozesshilfsmittel, Silankupplungsagenz | phr | 12,7 | 12,7 | 12,7 | 12,7 | 12,7 | 12,7 |
| Zinkoxid | phr | 8 | 8 | 8 | 8 | 8 | 8 |
| Alterungsschutzm ittel | phr | 4,6 | 4,6 | 4,6 | 4,6 | 4,6 | 4,6 |
| butylcarbamatfunktionalisiertes Phenol-Formaldehydharz^{a}) | phr | 2,0 | 2,0 | 2,0 | 2,0 | 2,0 | 2,0 |
| HMMM^{b)} | phr | 2,5 | 2,5 | 2,5 | 2,5 | 2,5 | 2,5 |
| Cobalt -borat -alkanoat | phr | 0,4 | 0,4 | - | - | - | - |
| Haftungsstabilisator^{c)} | phr | - | - | - | - | 0,8 | 0,8 |
| Beschleuniger DCBS | phr | 1,7 | - | 1,7 | - | 1,7 | - |
| Beschleuniger TBSI | phr | - | 1,4 | - | 1,4 | - | 1,4 |
| Schwefel | phr | 4,3 | 4,3 | 4,3 | 4,3 | 4,3 | 4,3 |

| | | | | | | | |
|---|---|---|---|---|---|---|---|
| ^{a)} Alnovol ^{®} PN 760/Past der Firma Allnex Netherlands B. V. ^{b)} Hexamethoxymethylmelamin 65 %ig auf Kieselsäure ^{c)} Duralink^{™} HTS der Firma Eastman (NaO₃SS(CH₂)₆SSO₃Na·2H₂O)) | | | | | | | |

**Tabelle 2**

| **Eigenschaften** | **Einheit** | **1** | **2** | **3** | **4** | **5** | **6** |
|---|---|---|---|---|---|---|---|
| t₉₀ | min | 13,3 | 11.1 | 14.2 | 13.1 | 14.3 | 12.9 |
| Ungealtert | | | | | | | |
| Härte | ShoreA | 79 | 81 | 80 | 88 | 79 | 80 |
| Rückprallelastizität | % | 42 | 40 | 40 | 44 | 42 | 41 |
| Zugfestigkeit | MPa | 21.9 | 18.1 | 21.3 | 21.1 | 21.2 | 21.5 |
| Bruchdehnung | % | 515 | 419 | 511 | 488 | 515 | 519 |
| Ermüdungsrissbest. | kZyklen | 443 | 386 | 251 | - | 228 | 602 |
| Gealtert 7 d. 70 °C, Luft | | | | | | | |
| Härte | ShoreA | 85 | 85 | 86 | 88 | 84 | 85 |
| Rückprallelastizität | % | 46 | 45 | 46 | 44 | 46 | 46 |
| Zugfestigkeit | MPa | 22.1 | 20.7 | 23.0 | 18.0 | 22.3 | 22.0 |
| Bruchdehnung | % | 381 | 341 | 414 | 275 | 400 | 388 |
| Ermüdungsrissbest. | kZyklen | 186 | 107 | 228 | - | 143 | 284 |
| Haftung auf Stahlcord | | | | | | | |
| Herausziehkraft (ungealt.) | % | 100 | 96 | 100 | 85 | 100 | 91 |
| Bedeckung (ungealtert) | % | 88 | 93 | 86 | 88 | 86 | 86 |
| Herausziehkraft (gealtert, 2 d, 70 °C, O₂) | % | 100 | 1 27 | 94 | 123 | 76 | 115 |
| Bedeckung (gealtert, 2 d, 70 °C, O₂) | % | 84 | 91 | 76 | 86 | 73 | 86 |
| Herausziehkraft (gealtert, 5 d, 105 °C, Sattdampf) | % | 100 | 105 | 70 | 80 | 104 | 94 |
| Bedeckung (gealtert, 5 d, 105 °C, Sattdampf) | % | 85 | 86 | 81 | 77 | 87 | 86 |

Aus den Tabellen wird ersichtlich, dass die erfindungsgemäße Mischung 6 ohne Cobalt aber mit Haftungsstabilisator und dem Sulfenimidbeschleuniger eine verbesserte Haftung zum Stahlcord (s. Herausziehkraft und Bedeckung) insbesondere nach Sauerstoffalterung aufweist. Hinsichtlich Härte, Rückprallelastizität, Zugfestigkeit und Bruchdehnung sowohl vor als auch nach Alterung an Luft liegt die Mischung 6 auf dem Niveau der Vergleichsmischung 1. Die erfindungsgemäße Mischung 6 weist zudem eine deutlich verbesserte Ermüdungsrissbeständigkeit sowohl vor als auch nach Alterung auf. Produkte mit metallischen Festigkeitsträgern, die mit einer derartigen Mischung gummiert sind, zeigen eine verbesserte Haltbarkeit.

Im Vergleich zu den Mischungen 3 und 5 mit DCBS als Vulkanisationsbeschleuniger zeichnet sich die Mischung 6 mit TBSI als Vulkanisationsbeschleuniger zusätzlich durch den Vorteil einer kurzen Ausvulkanisationszeit t₉₀ aus, die eine Optimierung des Produktionsprozesses ermöglicht.

## Patentansprüche

1. Schwefelvernetzbare, im Wesentlichen von Cobalt freie Gummierungsmischung für metallische Festigkeitsträger, enthaltend
- 0,5 bis 3 phr (Gewichtsteile, bezogen auf 100 Gewichtsteile der gesamten Kautschuke in der Mischung) zumindest eines Sulfenimidbeschleunigers und
- 0,25 bis 5 phr zumindest eines nach der Vulkanisation wirkenden Haftungsstabilisators.

2. Schwefelvernetzbare Gummierungsmischung nach Anspruch 1, **dadurch gekennzeichnet, dass** sie 1 bis 2 phr zumindest zumindest eines Sulfenimidbeschleunigers enthält.

3. Schwefelvernetzbare Gummierungsmischung nach Anspruch 1 oder 2, **dadurch gekennzeichnet, dass** der Sulfenimidbeschleuniger N-tert.-Butyl-2-benzothiazolsulfenimid (TBSI) ist.

4. Schwefelvernetzbare Gummierungsmischung zumindest einem der vorhergehenden Ansprüche, **dadurch gekennzeichnet, dass** sie 0,5 bis 2 phr zumindest eines nach der Vulkanisation wirkenden Haftungsstabilisators enthält.

5. Schwefelvernetzbare Gummierungsmischung nach zumindest einem der vorhergehenden Ansprüche, **dadurch gekennzeichnet, dass** der nach der Vulkanisation wirkende Haftungsstabilisator Natrium-Hexamethylen-1,6-bisthiosulfat-Dihydrat (NaO₃SS(CH₂)₆SSO₃Na·2 H₂O) ist.

6. Schwefelvernetzbare Gummierungsmischung nach zumindest einem der vorhergehenden Ansprüche, **dadurch gekennzeichnet, dass** sie
- 1 bis 2 phr N-tert.-Butyl-2-benzothiazolsulfenimid (TBSI) und
- 0,5 bis 2 phr Natrium-Hexamethylen-1,6-bisthiosulfat-Dihydrat (NaO₃SS(CH₂)₆SSO₃Na·2H₂O) enthält.

7. Schwefelvernetzbare Gummierungsmischung nach zumindest einem der vorhergehenden Ansprüche, **dadurch gekennzeichnet, dass** sie 2 bis 10 phr Zinkoxid enthält.

8. Schwefelvernetzbare Gummierungsmischung nach zumindest einem der vorhergehenden Ansprüche, **dadurch gekennzeichnet, dass** der metallische Festigkeitsträger ein vermessingter Stahlcord ist.

9. Fahrzeugluftreifen, der eine mit Schwefel vernetzte Gummierungsmischung gemäß Anspruch 1 aufweist.

10. Fahrzeugluftreifen nach Anspruch 9, **dadurch gekennzeichnet, dass** er eine Gürtelgummierung aus der Gummierungsmischung aufweist.
